# EUROPEAN PATENT SPECIFICATION

(11) **EP 0 738 613 B1**
(45) Date of publication and mention of the grant of the patent: **07.06.2000**
(21) Application number: 96105865.8
(22) Date of filing: 15.04.1996
(51) Int. Cl.: B60C 1/00, C08L 21/00, C08K 13/02

(54) **Tire with cap-base construction tread**
Reifen mit Laufflächenaufbau aus zwei Schichten
Pneumatique à bande de roulement formée de deux couches

(30) Priority: 21.04.1995 US 427294
(43) Date of publication of application: 23.10.1996
(73) Proprietor: THE GOODYEAR TIRE & RUBBER COMPANY, Akron, Ohio 44316-0001 (US)
(72) Inventor: Kihn, Jean-Claude Joseph Marie, 7435 Hollenfels (LU)
(74) Representative: Leitz, Paul

(56) References cited:
- EP-A- 0 631 982
- US-A- 4 820 751
- US-A- 5 225 011
- US-A- 5 470 929
- DATABASE WPI Section Ch, Week 9108 Derwent Publications Ltd., London, GB; Class A95, AN 91-055763 XP002009657 & JP-A-03 007 602 (TOYO RUBBER IND KK) , 14 January 1991

## Description

### Field

This invention relates to a tire having a rubber tread of a cap/base construction wherein the base is composed of carbon black reinforced natural rubber, which can also contain silica, and the cap is composed of a blend of elastomers which is reinforced with specified silica and with carbon black.

The invention particularly relates to truck tires and bus tires which are collectively referred to herein as truck tires.

### Background

Pneumatic rubber tires are conventionally prepared with a rubber tread which can be a blend of various rubbers which is typically reinforced with carbon black.

In one aspect, tires such as for example truck tires and other relatively large tires including relatively heavy duty light truck tires, which are normally expected to be capable of supporting and carrying relatively large vehicular loads, tend to generate a greater internal temperature than comparable passenger vehicle-type tires.

The truck tire treads are typically of a cap/base construction, with the tread cap designed to be ground-contacting and thus contain a lug/groove ground-contacting configuration, and with the tread base underlying and supporting the tread cap and positioned between the tread cap and the tire carcass. Generally, the tread cap and tread base are a co-extruded component of the tire. The tread base is not intended to normally be ground-contacting and thus not normally intended to have the same measure of tread properties as, for example, the tread cap properties of traction and tread wear.

For such relatively heavy duty tires, heat buildup, evidenced by tire running temperature buildup, or increase, is normally unwanted, although a substantial portion of the heat buildup, or temperature increase, is relatively unavoidable during a running of the tire under load.

However, it remains to be desirable to provide a rubber tire tread for use with tires on various trucks and buses, including light to medium trucks and buses, which will generate less heat under typical operational conditions particularly since higher tire running conditions tend to prematurely age the tire rubber and associated tire construction and, thus, tend to shorten the effective life of the tire, which may include the tire carcass. The effective life of the carcass is considered herein to be important because it is desirable to retread the carcass after the tire tread becomes worn.

In another aspect, it is desired to provide such a tire which can generate less heat under operational conditions, yet have acceptable treadwear and traction (skid resistance).

It is envisioned that such tread would be of a cap/base construction where the tread base is of a natural rubber composition reinforced with carbon black and optionally with a combination of carbon black and silia. A cap/base construction for tire treads is well known to those skilled in such tire tread art. For example, see US-A- 3 157 218 as being illustrative of such tread construction.

It is further envisioned that the tread cap be reinforced with a precipitated silica, accompanied with a silica coupler, and carbon black reinforcement. The purpose of utilizing silica as reinforcement for the tread cap elastomers in a tread of cap/base construction to provide a tire tread construction which can run cooler, lower or substantially maintain the tire rolling resistance, and also enhance or substantially maintain tread traction capabilities, than a tread with an equivalent amount of carbon black reinforcing filler. It is contemplated that a silica reinforced rubber tread cap in a tread of cap/base construction would experience less temperature buildup than a comparable carbon black reinforced rubber tread under similar working conditions, namely as a tire on a vehicle, namely a truck, being run under loaded, operational conditions.

However, for many tire tread applications, it is contemplated that a utilization of a quantitative amount of silica in a tire tread may compromise the treadwear aspect of the tire.

In practice for preparation of tire treads, various rubbers, or elastomers, are typically evaluated, selected and blended for a purpose of achieving desired tire tread properties and particularly a balance of tire tread characteristic properties, mainly, rolling resistance, traction and wear.

For various applications utilizing rubber including applications such as tires and particularly tire treads, sulfur cured rubber is utilized which contains substantial amounts of reinforcing filler(s). Carbon black is commonly used for such purpose and normally provides or enhances good physical properties for the sulfur cured rubber. Particulate silica might also sometimes used for such purpose, particularly if the silica is used in conjunction with a coupling agent. In some cases, a combination of silica and carbon black has been utilized for reinforcing fillers for various rubber products, including treads for tires.

It is important to appreciate that, conventionally, carbon black is considered to be a more effective reinforcing filler for rubber tire treads than silica if the silica is used without a coupling agent.

Indeed, at least as compared to carbon black, there tends to be a lack of, or at least an insufficient degree of, physical and/or chemical bonding between the silica particles and the rubber elastomers to enable the silica to become a reinforcing filler which is as efficient or effective as carbon black for the rubber for most purposes, including tire treads, if the silica is used without a coupler. While various treatments and procedures have been devised to overcome such deficiencies, materials, or compounds, capable of reacting with the silica surface and interacting with the rubber elastomer molecule are desirable. Such materials are sometimes referred to, by those having skill such art, as coupling agents, or silica couplers or silica adhesives. Such coupling agents, for example, may be premixed, or pre-reacted, with the silica particles or added to the rubber mix during the rubber/silica processing, or mixing, stage. If the coupling agent and silica are added separately to the rubber mix during the rubber/silica mixing, or processing stage, it is considered that the coupling agent then combines in situ with the silica.

In particular, such coupling agents may be composed, for example, of a silane which has a constituent component, or moiety, (the silane portion) capable of reacting with the silica surface and, also, a constituent component, or moiety, capable of interacting with the rubber, particularly a sulfur vulcanizable rubber which contains carbon-to-carbon double bonds, or unsaturation. In this manner, then the coupler acts as a connecting bridge between the silica and the rubber and thereby enhances the rubber reinforcement aspect of the silica.

The rubber-interactive group component, or moiety, of the coupler may be, for example, one or more of groups such as mercapto, amino, vinyl, epoxy, and sulfur groups, preferably a sulfur or mercapto moiety and more preferably sulfur.

Numerous coupling agents are taught for use in combining silica and rubber, such as for example, silane coupling agents containing a polysulfide component, or structure, such as, for example bis 3-(trialkoxysilylalkyl) polysulfide where the polysulfide bridge contains from 2 to 8 connecting sulfur atoms. Such a polysulfide might be, for example bis-(3-triethoxysilylpropyl) tetrasulfide, trisulfide or disulfide (for example, see US-A- 3 873 489).

For silica reinforced tire treads, US-A- 5 227 425 discloses the use of a solution polymerization prepared SBR which is silica reinforced with a filler of silica and carbon black which contains at least 30 weight percent silica with specified silica characterizations and in which is preferenced over an emulsion polymerization prepared SBR. US-A- 4 519 430 discloses a silica rich tire tread which is composed of various rubbers. Such rubbers may be for example, although other rubbers and rubber combinations are suggested, solution or emulsion SBR, optionally with polybutadiene rubber and/or polyisoprene rubber together with a mixture of silica and carbon black, with silica being required to be a major component of the silica/carbon black reinforcing filler.

US-A- 5 225 011 discloses a tire having a center rubber for middle part of the tread and a side rubber for both sides thereof. The center rubber is composed of a rubber composition of superior cut resistance wherein either a natural rubber of a SBR blended natural rubber is compounded with carbon black of large iodine absorption number, silica and a silane coupling agent.

JP 03/007602 discloses a tire of cap-base structure having good high speed durability. The silane coupling agent in the tread base rubber is e.g. gamma-mercaptopropyltrimethoxy-silane or 3-(triethoxysilyl)-propyltetrasulphide.

The term "phr" where used herein, and according to conventional practice, refers to parts of a respective material per 100 parts by weight or rubber, or elastomer.

In the description of this invention, the terms "rubber" and "elastomer", where used herein unless otherwise prescribed, are used interchangeably. The terms "rubber composition", "compounded rubber" and "rubber compound" where used herein unless otherwise prescribed, are used interchangeably to refer to rubber which has been blended or mixed with various ingredients or materials and such terms are well known to those having skill in the rubber mixing, or rubber compounding, art.

The Tg of a polymer, particularly an elastomer, as used herein unless other wise prescribed, refers to its glass transition temperature which can conventionally be determined, for example, buy a differential scanning calorimeter at heating rate of 15°C, sometimes alternatively at about 10°C, to an observed transition of the temperature versus time curve. It is understood that such Tg determination is well known to those having skill in such art.

### Summary and Practice of the Invention

In accordance with this invention, a pneumatic tire having a TRA rated maximum load limit of at least 1220 kg, (2684 lbs), alternatively at least 2730 kg, (6934 lbs), and generally in a range of 2043 kg to 5000 kg, (4,500 to 11,015 lbs) at an inflation pressure in a range of 723 kpa to 792 kpa (105 to 115 psi) and a bead diameter of at least 48 cm (19 inches), alternatively at least 56 cm (22 inches), and generally in a range of 48 to 64 cm (19 to 25 inches) is provided having a rubber tread of cap/base construction wherein
(A) the tread base is comprised of 100 parts by weight cis 1,4-polyisoprene natural rubber reinforced with 20 to 60, alternatively 25 to 40, phr of reinforcing filler composed of 20 to 45, alternatively 25 to 30 phr of carbon black and, correspondingly, zero to 15, alternatively 10 to 15 phr precipitated silica and wherein
(B) the tread cap is comprised of, based on 100 parts by weight rubber, (1) 20 to 50, alternatively 30 to 50, phr of cis 1,4-polyisoprene natural rubber, (2) 25 to 80, alternatively 30 to 70, phr of styrene/butadiene copolymer elastomer selected from at least one of emulsion polymerization prepared styrene/butadiene copolymer and organic solution polymerization prepared styrene/butadiene copolymer, (3) zero to 50, alternatively 10 to 25, phr of cis 1,4-polybutadiene elastomer, (4) 40 to 80, alternatively 40 to 60, phr of reinforcing filler comprised of (i) 5 to 80, alternatively 74 to 80 or 5 to 70, phr carbon black and, correspondingly, (ii) 95 to 20, alternatively 26 to 20 or 95 to 30, phr of precipitated silica and (5) at least one silica coupler having a silane moiety reactive with the surface of the silica and a moiety interactive with said elastomer; wherein said silica is characterized by a combination of (i) BET surface area of 160 to 200, (ii) an average V(Hg) value in a range of 1.7 to 1.95, (iii) an average PSD max in a range of 10 to 45 and (iv) an average V2/V1 ratio in a range of 30 to 65.

The said tread rubber may also contain from 10 to 50, alternatively 20 to 40, phr of at least one additional elastomer selected from at least one of isoprene/butadiene copolymer elastomer and trans 1,4-polybutadiene elastomer. Such isoprene/butadiene copolymer elastomer may have an isoprene content in a range of 10 to 90, alteratively 30 to 70, percent.

Correspondingly, with the addition of one or more of such additional elastomers to the tread cap and/or tread base and as would be understood by one having skill in the rubber compounding art, the sum of the aforesaid required basic natural rubber, styrene/butadiene copolymer elastomer and optional cis 1,4-polybutadiene elastomer and the said basic natural rubber content for the said tread base would be automatically adjusted to being 90 to 50 phr, alternatively 80 to 60 phr for the tread cap and/or tread base as the case may be.

The said tread base rubber may also contain at least one silica coupler having a silane moiety reactive with the surface of the silica and a moiety interactive with said elastomers.

In one aspect, it is considered herein that for said tread cap, the weight ratio of carbon black to silica may be in a range of 2/1 to 1/10.

The rubber blends containing the said additional isoprene/butadiene elastomer is an important feature of the invention designed to enhance treadwear resistance and reduce heat build-up properties of a tire tread containing selected silica reinforcement and, also carbon black reinforcement.

Silicas having the aforesaid mercury microporosity combination of characteristics is also considered an important aspect of this invention.

In one aspect, the styrene/butadiene copolymer elastomer, may have a styrene content of 5 to 30 percent and a Tg in a range of -80 to -40 °C.

In the practice of this invention, a contribution of the styrene/butadiene copolymer elastomer believed to, in one aspect, aid in enhancing or promoting the tire tread's tear resistance property, particularly where either a solution polymerization prepared styrene/butadiene copolymer elastomer or an emulsion polymerization prepared styrene/butadiene copolymer elastomer is used in combination with cis 1,4-polyisoprene natural rubber.

The said cis 1,4-polybutadiene rubber (BR) is believed to be beneficial to enhance the tire treadwear. The BR can have a cis 1,4-content in a range of 93 to 99 percent.

The use of such BR in rubber blend for tread rubber is well known to those having skill in such art.

The synthetic elastomers can be prepared, for example, by organic solution polymerization of respective monomers and their preparation is well known to those skilled in such art.

The use of cis 1,4-polyisoprene rubber, particularly and preferably as natural rubber, in tire treads is well known to those having skill in the such art.

Thus, in the practice of this invention, a balanced rubber blend of at least two, namely natural rubber and styrene/butadiene copolymer elastomer, and preferably at least three, namely the natural rubber, styrene/butadiene elastomer and cis 1,4-polybutadiene elastomer, diene based elastomers for the tread cap is provided which relies upon a reinforcing filler which is composed of carbon black and selected silica which, in turn, relies on a silica coupler for the reinforcing effect of the filler.

The aforesaid TRA "maximum rated load limit" characteristic of the tire is intended to differentiate present a truck tire typically designed for running under load conditions substantially higher than conventional passenger tire loads. The term "TRA" refers to "The Tire and Rim Association Inc." which is well known to those familiar with tire manufacturing. It is referred to herein as "TRA". The TRA is an association which has, as a purpose "... the establishment and promulgation of interchangeability standards for tires, rims and allied parts for the guidance of manufacturers of such products ...". The TRA publishes an annual Yearbook, for example the 1995 Yearbook, which includes, for example, characterizations of truck tires and passenger tires, including maximum rated load values at various inflation pressures. It can readily be seen that, most truck tires, particularly for medium truck tires and above, have maximum rated load values at various inflation pressures significantly greater than conventional passenger tires. Therefore it is considered herein that such values effectively differentiate the intended truck tires for this invention from passenger tires. For the purposes of the description of this invention, the rim diameters referenced in the TRA Yearbook are equated to tire bead diameters. Appropriately, the tire bead diameters are herein considered as being measured from the surface of the rubber encapsulated wire beads and not the wire portion of the beads, as is believed herein is appropriate.

It is further considered herein that the truck tires of this invention have an appreciably greater need for relatively cooler running tires than passenger tires which are expected to be utilized for substantially reduced loads. For a tire tread to contribute significantly to the cooler running of a tire, it is considered herein that a tread of cap/base construction is desirable where the tread base is primarily composed of cis 1,4-polyisoprene natural rubber and where the tread cap and tread base compositions cooperate to promote such effect. In practice, such tread is created by co-extruding the tread cap and tread base together through a singular die to form the extruded tread construction. The compounded rubber compositions are extruded through the die at a temperature, for example, in a range of 100 °C to 125 °C, often typically about 110 °C, and thus is considered as being a relatively hot extrusion process, although such actual extrusion temperatures themselves are considered normal for a rubber extrusion process.. The extruded tread stock is then built onto a rubber tire carcass to create an assembly thereof. The assembly is then vulcanized, or cured, at an elevated temperature. Such overall process is well known to those skilled in such art. In this manner then, by the aforesaid co-extrusion process and the covulcanization of the tread cap and tread base, the tread cap and tread base are considered herein to be an integral, cooperative, unit of the tire. Therefore, it is considered herein that the tread cap and tread base desirably cooperate to promote the cooler running effect for the tire. By the term cooler running for the tire tread it is meant that internal operating temperatures are sufficiently low so as to reduce, or retard, heat degradation of the tire tread rubber compositions. An example of such cooler running effect is intended to be manifested in a longer service life for the tire carcass, or casing. It is known to those having skill in truck tire usage that cooler running tire treads are desirable in order to lengthen, or increase, tire life insofar as heat durability is concerned.

The rubber blend for the tread cap, which is intended to be ground-contacting during use of the tire, and is required to be of a base rubber blend of said natural rubber and said styrene/butadiene copolymer elastomer, cis 1,4-polybutadiene elastomer and isoprene/butadiene copolymer elastomer, in combination with the primarily natural rubber based tread base. Such base rubber blend for the tread cap is considered herein to be an important feature of the invention and designed to enhance treadwear, heat buildup and rolling resistance of a tire tread containing a substantial amount of both carbon black and silica reinforcement.

The accompanying drawings are provided for further understanding of the invention, although it is not intended that the invention be limited to the presentation of the drawings. In the drawings;

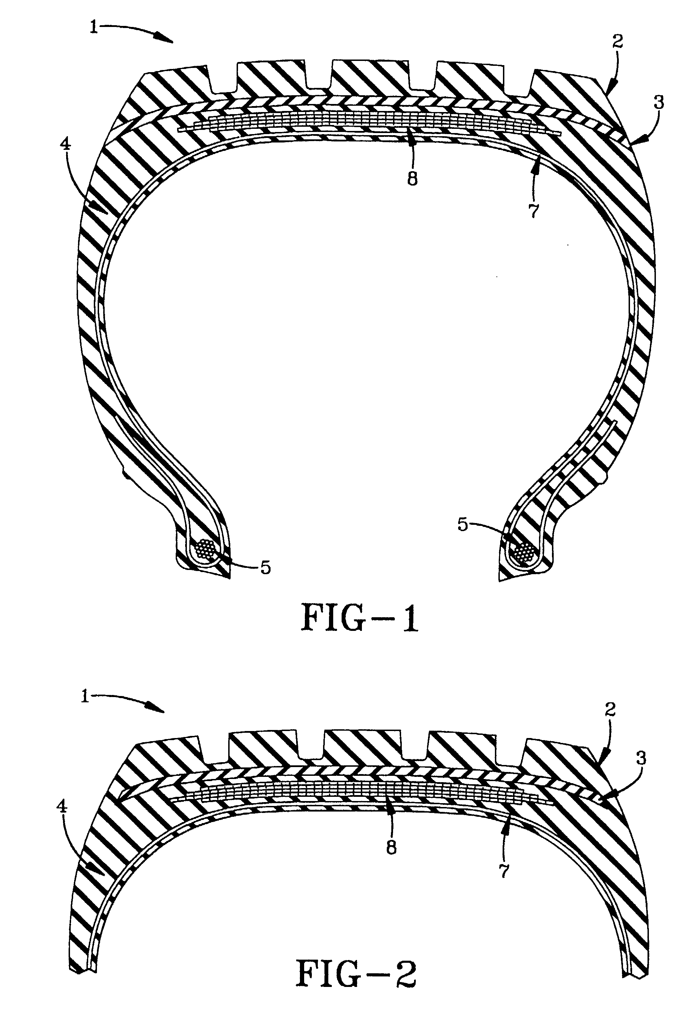

FIG 1 is a cross-sectional view of a vulcanized showing a tread with a cap/base construction where the tread cap is of a lug and groove configuration, and where the tread base supports the tread cap and extends to the outer side surface of the tire, together with a portion of a supporting radial ply carcass. Sometimes a tire tread configuration, composed of lugs and grooves, also contains ribs which are not shown in this drawing. Such tire lug and groove construction, with and without ribs, are well known to those having skill in such art.

FIG 2 is a cross-sectional view of a vulcanized showing a tread with a cap/base construction where the tread cap is of a lug and groove configuration, together with a portion of a supporting radial ply carcass, wherein the tread base supports the tread cap and terminated within the shoulder region of the tire carcass.

Referring to the drawings, a tire construction 1 is provided with a circumferential tread component composed of a tread cap 2 and tread base 3 construction. The tread cap 2 and tread base 3 is a co-extruded component of the tire 1. The tire has a carbon black reinforced rubber carcass 4 which is composed of spaced beads 5 encased with carbon black reinforced rubber, carbon black reinforced rubber sidewalls 6 and supporting carcass plies 7 and circumferential belt 8. In one aspect the carcass plies 7 of the carcass 4, for the truck tire, has steel cord reinforcement.

The rubber tread base 3 is carbon black reinforced with at least 30 phr of carbon black, and sometimes silica, usually a minor amount of silica as compared to the carbon black. The sidewall rubber 6 and rubber for the beads 5 are reinforced with at least about 40 phr of carbon black. The tread base elastomer is cis 1,4-polyisoprene natural rubber.

The rubber tread cap 2 is reinforced with a filler composed of carbon black and precipitated silica, namely about 30 phr carbon black and about 25 phr of precipitated silica, together with about 4 phr silica coupler based on the silica. The silica is of a mercury porosity characteristic as prescribed by this invention.

The siliceous pigments to be used as reinforcement in the tread cap of this invention are precipitated siliceous pigments (silica). Such precipitated silicas are prepared, for example, by controlled acidification of a soluble silicate, e.g., sodium silicate.

The siliceous pigment (silica) may, for example, have an ultimate particle size in a range of 50 to 10,000 angstroms, preferably between 50 and 400 angstroms. The BET surface area of the pigment, as measured using nitrogen gas, is preferably in the range of 80 to 300, perhaps even up to about 360, although more usually 100 to 200, square meters per gram. A BET method of measuring surface area is described in the Journal of the American Chemical Society, Volume 60, page 304 (1930).

The silica also typically has a dibutylphthalate (DBP) absorption value in a range of 150 to 350, and more typically 200 to 300.

The silica might have an average ultimate particle size, for example, in a range of 0.01 to 0.05 micron as determined by the electron microscope, although the silica particles may be even smaller in size.

Various commercially available silicas may be considered for use in the tread of this invention, particularly the tread cap, such as, for example only and without limitation, silicas commercially available from Rhone-Poulenc, such as, for example, Zeosil 1165MP, silicas available from Degussa AG with designations such as, for example, BV3370GR, and silicas available from J.M. Huber such as, for example, Zeopol 8745.

Mercury surface area/porosity is the specific surface area determined by Mercury porosimetry. For such technique, mercury is penetrated into the pores of the sample after a thermal treatment to remove volatiles. Set up conditions may be suitably described as using a 100 mg sample; removing volatiles during 2 hours at 105°C and ambient atmospheric pressure; ambient to 2000 bars pressure measuring range. Such evaluation may be performed according to the method described in Winslow, Shapiro in ASTM bulletin, p.39 (1959) or according to DIN 66133. For such an evaluation, a CARLO-ERBA Porosimeter 2000 might be used.

The average mercury porosity specific surface area for the silica, in general, should be in a range of 100 to 300 m²/g and for specialized silicas for use in this invention, a range of 150 to 220 m²/g. It is recognized that such range overlaps and thus includes many classical silicas.

A suitable pore size distribution for the silica, in general, according to such mercury porosity evaluation is considered herein to be:

five percent or less of its pores have a diameter of less than about 10 nm; 60 to 90 percent of its pores have a diameter of 10 to 100 nm; 10 to 30 percent of its pores have a diameter of 100 to 1000 nm; and 5 to 20 percent of its pores have a diameter of greater than about 1000 nm.

The physical configurations of the actual silica aggregates, which are themselves composed of pluralities of primary silica particles joined together, is important for the tread rubber composition of this invention. The physical configuration of the silica aggregate is considered to contain concave regions of various volumes which are referred to herein as macropores and sometimes referred to simply as pores and, collectively as a measure of porosity of the silica.

The aforesaid macropores apparently capture or grasp portions of the elastomer during the mixing of elastomer and silica. It is considered herein that the containment, or capture, of a portion of the elastomer within the macropore regions of the silica aggregate substantially enhances the reinforcing effect of the silica aggregates for the tread rubber of this invention.

It appears to be important that the average volume of the macropores of the silica aggregate configuration be neither too small nor too large for an optimization of this effect.

Thus for the specialized silicas, when used in this invention, the pore diameters, or pore diameter distribution, thereof may be measured by the aforesaid mercury porosimetry and calculated by, for example the Washburn equation with an angle of contact that is equal to about 140 degrees and a surface tension gamma equal to about 480 dynes/cm using an instrument such as Porosimeter 2000 by Carlo Erba Instruments.

The pore size distribution for consideration in this invention is represented by an average pore diameter ratio of V2/V1 and is considered herein to be less than 30 for classical silicas and greater than 30, for example average ratios in a range of 30 to 70, for the specialized silicas for use in this invention. The V2/V1 ratio is a ratio of pore volumes having a diameter between 17.5 to 27.5 m²/g (V2) to pore volumes having diameters between 10 to 40 m²/g (V1). A higher V2/V1 value is considered herein to be more desirable, or optimal, for elastomer/silica interaction.

A V(Hg) is represented herein as the total volume of mercury which penetrates the silica, according to the aforesaid mercury porosimetry testing procedure, in terms of cm³/gm. A representative V(Hg) for classical silicas is believed to be less than 1.7 and for specialized silicas greater than 1.7 with, for example, average values in a range of 1.7 or 1.75 to 1.95, for silicas contemplated for use in this invention. The V(Hg) value is believed to indicative of the overall porosity of the silica with a higher number representing a silica with a greater overall pore volume.

A PSD max value is a pore size maximum value represented herein as a first derivative inflection point in a curve represented as a plot of V(Hg), (y axis), versus pore size diameter, nm, (x axis). For classical silicas, an average value is considered herein to be about 35 or greater and for specialized silicas an average value of 45 or less is believed to be representative values. It is recognized that the aforesaid ranges of values may overlap somewhat. The PSD max value is believed to be indicative of a most representative pore size of the silica aggregate.

Thus, it is believed herein that a definitive measure of values for a specialized silica for use in some aspects of this invention is a combination of (i) BET surface area of 160 to 200, (ii) an average V(Hg) value in a range of 1.7 to 1.95, (iii) an average PSD max in a range of 10 to 45 and (iv) an average V2/V1 ratio in a range of 30 to 65. The combination of these values is believed to be a fingerprint of suitable specialized silicas which may be used in this invention and is intended to differentiate such silicas from classical silicas.

It is readily understood by those having skill in the art that the rubber composition of the tread rubber would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, silica and carbon black. As known to those skilled in the art, depending on the intended use of the sulfur vulcanizable and sulfur vulcanized material (rubbers), the additives mentioned above are selected and commonly used in conventional amounts.

Typical additions of carbon black, silica and silica coupler for this invention are hereinbefore set forth.

Typical amounts of tackifier resins, if used, comprise 0.5 to 10 phr, usually 1 to 5 phr. Typical amounts of processing aids comprise 1 to 30 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine and others, such as, for example, those disclosed in the Vanderbilt Rubber Handbook (1978), pages 344-346. Typical amounts of antiozonants comprise 1 to 5 phr. Typical amounts of fatty acids, if used, which can include stearic acid comprise 0.5 to 4 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, with a range of from one to 2.5, being preferred.

Accelerators are used to control the time and/or temperature required for vulcanization and to improve the properties of the vulcanizate. Retarders are also used to control the vulcanization rate. In one embodiment, a single accelerator system may be used, i.e., primary accelerator. Conventionally and preferably, a primary accelerator(s) is used in total amounts ranging from 0.5 to 4, preferably 0.8 to 2.5, phr. In another embodiment, combinations of a primary or and a secondary accelerator might be used, with the secondary accelerator being used in amounts of 0.05 to 3 phr, for example, in order to activate and to improve the properties of the vulcanizate. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not considered to be an aspect of this invention which is more primarily directed to the use of silica as a reinforcing filler in combination with a coupling agent in a prescribed rubber blend.

The presence and relative amounts of the above additives are not considered to be an aspect, except as may hereinbefore be set forth, of the present invention which is more primarily directed to the tire with cap/base construction utilizing various elastomers in the tread cap and tread base with the tread base elastomers being reinforced with carbon black, optionally with a minor amount of silica, and tread cap elastomers being reinforced with a filler of prescribed precipitated silica having a mercury microporosity characteristic, with the silica being used in conjunction with a silica coupler. In one aspect for the tread cap, the silica may be partially replaced with carbon black as a reinforcing filler.

The tire can be built, shaped, molded and cured by various methods which will be readily apparent to those having skill in such art.

The invention may be better understood by reference to the following examples in which the parts and percentages are by weight unless otherwise indicated.

### EXAMPLE I

Rubber compositions (compounded rubber) were prepared of various blends of cis 1,4-polyisoprene natural rubber, solution polymerization prepared styrene/butadiene copolymer elastomer and cis 1,4-polybutadiene elastomer and are referred to herein as Samples A, B and C.

A control rubber composition composed of emulsion polymerization prepared styrene/butadiene copolymer rubber (E-SBR) and cis 1,4-polybutadiene rubber and cis 1,4-polyisoprene natural rubber (NR) was prepared and identified herein as Sample X.

A tread base rubber composition was prepared composed of cis 1,4-polyisoprene natural rubber was prepared and identified herein as Sample Y.

The rubber compositions were prepared by mixing the ingredients in several sequential non-productive mixing stages (without the curatives) and a final productive mixing stage (basically for the curatives), then the resulting composition was cured under conditions of elevated temperature and pressure, namely for about 30 minutes for about 150 °C.

For the non-productive mixing stages, exclusive of the accelerator(s), sulfur curatives, and antioxidant which are added in the final, productive mixing stage, all of the ingredients were mixed in the first non-productive stage except for 20 to 50 percent of the reinforcing fillers (silica or carbon black), with proportional amounts (to the reinforcing fillers) of coupler and processing oil, which were added in the second and third non-productive mixing stage. The ingredients may be mixed in each of the non-productive mixing stages for one to five minutes to a temperature of about 165°C, all in a Banbury internal type of mixer.

To the resulting rubber composition (mixture) may be then mixed, in the final, productive mixing stage, the remaining ingredients in a Banbury internal type mixer for one to 2 minutes to a temperature of about 110°C.

The rubber was then used to prepare a tire tread and the tire carcass and tread assembly vulcanized.

The rubber composition was comprised of the ingredients illustrated in Table 1. The values, for the most part, are simply rounded to the nearest whole number.

**Table 1**

| Sample # | X | A | B | C | Y |
|---|---|---|---|---|---|
| Non-Productive Mix Stages | | | | | |
| S-SBR¹ | 0 | 25 | 50 | 70 | 0 |
| E-SBR² | 25 | 0 | 0 | 0 | 0 |
| SR³ | 25 | 25 | 20 | 0 | 0 |
| Natural Rubber⁴ | 50 | 50 | 30 | 30 | 100 |
| N-220⁵ | 55 | 30 | 0 | 0 | 0 |
| N-121⁶ | 0 | 0 | 30 | 0 | 0 |
| N-347⁷ | 0 | 0 | 0 | 0 | 35 |
| Processing Oil, Aromatic | 5 | 5 | 10 | 14 | 2 |
| Fatty Acid | 2 | 2 | 2 | 2 | 1 |
| Silica⁸ | 0 | 25 | 25 | 60 | 0 |
| Plasticizers, resins and waxes | 4 | 4 | 4 | 4 | 2 |
| Coupling Agent⁹ | | 4 | 4 | 9.6 | 0 |

| Productive Mix Stage | | | | | |
|---|---|---|---|---|---|
| Zinc Oxide | 2.5 | 2.5 | 2.5 | 2.5 | 5 |
| Antioxidants¹⁰ | 3 | 3 | 3 | 3 | 3 |
| Sulfur | 1 | 1 | 1 | 1 | 1.4 |
| Sulfenamide and Aniline Type Accelerators | 1.1 | 1.6 | 1.6 | 3.0 | 1.5 |

| | | | | | |
|---|---|---|---|---|---|
| 1) An organic solution polymerization prepared styrene/butadiene copolymer elastomer having a styrene content of about 18 percent and a Tg of about -68 °C, extended with 20 phr oil are reported in this table on a dry elastomer basis without the oil, obtained as Coperflex SSBR8018A from the Coperbo company, Brazil | | | | | |
| 2) An emulsion polymerization prepared styrene/butadiene copolymer elastomer having a styrene content of about 24 percent obtained as Petroflex 1502 from the Petroflex company. | | | | | |
| 3) Cis 1,4-polybutadiene elastomer | | | | | |
| 4) Cis 1,4-polyisoprene natural rubber. | | | | | |
| 5) Added carbon black N-220 | | | | | |
| 6) Added carbon black N-121 | | | | | |
| 7) Added carbon black N347 | | | | | |
| 8) A silica obtained as Zeosil 1165 MP from Rhone Poulenc which is understood to be characterized by a combination of (i) BET surface area within a range of 160 to 200, (ii) an average V(Hg) value in a range of 1.7 to 1.95, (iii) an average PSD max in a range of 10 to 45 and (iv) an average V2/V1 ratio in a range of 30 to 65. | | | | | |
| 9) obtained as bis-3-triethoxysilylpropyl) tetrasulfide (50% active) commercially available as X50S from Degussa as a 50/50 blend of the tetrasulfide with N330 carbon black (thus, considered 50% active). Technically, the tetrasulfide is believed to be an organosilane polysulfide as a composite, or mixture, having an average number of sulfur atoms in a polysulfide bridge in a range of 3.5 to 4 connecting sulfur atoms, although the composite, or mixture may contain individual organosilane polysulfides with 2 to 8 connecting sulfur atoms. | | | | | |
| 10) Of the diarylparaphenylene diamine and dihydrotrimethylquinoline type | | | | | |

Various properties of the cured samples were determined by conventional means and reported in the following Table 2.

**Table 2**

| Sample # | X | A | B | C | Y |
|---|---|---|---|---|---|
| 300% Modulus (MPa) | 9.8 | 7.2 | 8 | 7.8 | 11.7 |
| Tensile Strength (MPa) | 20.6 | 18.2 | 20.4 | 18.5 | 23.6 |
| Elongation (%) | 560 | 600 | 600 | 570 | 520 |
| Hardness | 64 | 58 | 61 | 62 | 58 |
| Rebound (100 °C) | 58 | 67 | 65 | 66 | 82 |
| Flexometer Temperature (°C) | 40 | 29 | 35 | 34 | 12 |
| Percent Set | 4.7 | 2.5 | 3.4 | 3.3 | 0.8 |
| E' at 100°C (MPa) | 4 | 3.5 | 4 | 4.6 | 2.8 |
| Tan. Delta at 100°C | .07 | .06 | .07 | .08 | .02 |
| Tear resistance (N/mm) | 28 | 26 | 21 | 32 | 20 |

For the tensile elongation and 300 % modulus values tests, refer to ASTM Test D412-92, method B.

For the rebound tests, refer to DIN 53512.

For the hardness, Shore A as in ASTM 2240-91 may be referred to at room temperature, or about 23 °C.

For the flexometer test refer to ASTM Test D623. The flexometer test is considered herein to be significant because it specifically measures the temperature rise in the rubber test sample and the dimensional changes of the sample over time. The flexometer test is well known to those skilled in rubber composition evaluations particularly for use in tires.

For the E' values, which are sometimes referred to as the tensile storage modulus, reference may be made to "Science and Technology of Rubber, second edition, 1994, Academic Press, San Diego, CA, edited by James E. Mark et al, pages 249-254. The use of the storage modulus, E', to characterize rubber compositions is well known to those having skill in such art.

The tangent delta, or tan. delta, is a ratio of the tensile loss modulus, also known as E'', to the tensile storage modulus (E'). These properties, namely the E', E'' and tan. delta, characterize the viscoelastic response of a rubber test sample to a tensile deformation at a fixed frequency and temperature, measured at 100 degrees C.

The tan. delta and tensile storage modulus (E') are well known to those skilled in the rubber composition characterization art, particularly as relates to tires and tire treads. The tensile storage modulus (E') values are indicative of rubber compound stiffness which can relate to tread wear rates and evenness of tread wear. The tan. delta value at 100 degrees C is considered as being indicative of hysteresis, or heat loss.

In particular, the lower flexometer temperature rise values shown for Samples A, B, and C versus the higher flexometer temperature value shown for Control Sample X illustrate that the tire tread cap compositions made of either of the rubber compositions represented by Samples A, B or C would build up less heat under tire operating conditions than a tread cap of a rubber composition represented by Control Sample X and thus provide a cooler running tire tread, particularly when coupled, or combined, with the tread base Y to form a tire tread, which in comparison to Control Sample X builds up very little heat in the flexometer testing.

Indeed, it is considered herein to be significant that the tire tread cap composition candidates, represented by Samples B, C and D are composed of natural rubber, cis 1,4-polybutadiene elastomer and S-SBR elastomers which is reinforced with a combination of carbon black and specialized silica together with a silica coupler.

In particular, it is considered herein that rubber composition properties of the tire tread cap rubber compositions A, B and C taken together with tire base composition Y, particularly when compared with comparative control tire cap composition X, are predictive that a cap/base tread construction of this invention will provide a tire with enhanced (i) tread with a cooler internal running temperature as evidenced by the flexometer temperature values; and (ii) acceptable treadwear as evidenced by a combination of 300 percent modulus, tensile strength and storage modulus (E') at 100 °C.

Indeed it is considered herein that the cooperative combination of the outer tread cap and underlying tread base provides the following benefit: promotion of a cooler internal running temperature for the overall tread under operating conditions, namely running under load, which is predictively evidenced by the flexometer temperature values. This is considered as being beneficial to truck tire users by promoting a longer lasting carcass, due to the cooler running tread concept, and acceptable treadwear tire with potential fuel economy.

This is considered as being beneficial to truck tire users by given a longer lasting, due to the cooler running tread concept and acceptable treadwear tire with potential fuel economy.

### EXAMPLE II

Tires of size 11.00R22 where produced with treads of co-extruded cap/base construction with the tread base being of the Sample Y composition and the tread cap being rubber compositions shown as Sample A and Control Sample X of Example I herein as demonstrated in Table 1 and correspondingly identified herein as tires A and X.

The tires were tested by conventional tire testing procedures with results shown in the following Table 2. The Control tire for this Example is Tire X, which utilized the rubber composition shown by Sample X of Table 1 herein. The values for the Control Tire X are normalized to values of 100 and the associated values for Tire A is recited with values comparative to the values for the Control Tire X.

**Table 3**

| Test Values | Tire X | Tire A |
|---|---|---|
| Endurance (ECE 54) | 100 | 172 |
| Rolling Resistance | 100 | |
| Treadwear | 100 | |

The endurance values are according to ECE (European regulation), test No. 54 for tire endurance. The comparative tire endurance values show that Tire A ran significantly longer before failing, ie. less internal heat is generated by tire A.

While certain representative embodiments and details have been shown for the purpose of illustrating the invention, it will be apparent to those skilled in this art that various changes and modifications may be made therein without departing from the scope of the claims.

## Claims

1. A pneumatic tire characterized by having a TRA rated maximum load limit of at least 1220 kg, at an inflation pressure in a range of 723 kpa to 792 kpa and a bead diameter of at least 48 cm, the tire having a rubber tread of cap/base construction wherein
(A) the tread base is comprised of 100 parts by weight cis 1,4-polyisoprene natural rubber reinforced with 20 to 60 phr of reinforcing filler comprised of 70 to 100 weight percent carbon black and, correspondingly from zero to 30 weight percent precipitated silica and wherein
(B) the tread cap is comprised of, based on 100 parts by weight rubber, (1) 20 to 50 phr of cis 1,4-polyisoprene natural rubber, (2) 25 to 80 phr of styrene/butadiene copolymer elastomer selected from at least one of emulsion polymerization prepared styrene/butadiene copolymer and organic solution polymerization prepared styrene/butadiene copolymer, (3) zero to 50 phr of cis 1,4-polybutadiene elastomer; and which contains 40 to 80 phr of reinforcing silica and carbon black filler comprised of 5 to 60 phr of precipitated silica and at least one silica coupler having a silane moiety reactive with the surface of the silica and a moiety interactive with said elastomer; wherein said silica for said tread cap is identified by a combination of (i) BET surface area of 160 to 200 m²/g, (ii) an average V(Hg) value in a range of 1.7 to 1.95, (iii) an average PSD max in a range of 10 to 45 and (iv) an average V2/V1 ratio in a range of 30 to 65.

2. The pneumatic tire of claim 1 characterized by having a TRA rated load limit of at least 2730 kg, at an inflation pressure in a range of 723 to 792 kpa and having a bead diameter of at least 56 cm, the tire having a rubber tread of an integral cap/base construction wherein
(A) the tread base is comprised of 100 parts by weight cis 1,4-polyisoprene natural rubber reinforced with 20 to 60 phr of reinforcing filler composed of 70 to 100 weight percent carbon black and, correspondingly from zero to 30 weight percent precipitated silica and wherein
(B) the tread cap is comprised of, based on 100 parts by weight rubber, (1) 30 to 50 phr of cis 1,4-polyisoprene natural rubber, (2) 30 to 70 phr of styrene/butadiene copolymer elastomer selected from at least one of emulsion polymerization prepared styrene/butadiene copolymer and organic solution polymerization prepared styrene/butadiene copolymer, (3) 10 to 25 phr of cis 1,4-polybutadiene elastomer; 40 to 80 phr of carbon black and silica reinforcing filler comprised of 20 to 60 phr of said precipitated silica and at least one silica coupler having a silane moiety reactive with the surface of the silica and a moiety interactive with said elastomer.

3. The tire of claim 1 or 2 characterized in that, for said tread cap, the weight ratio of carbon black to silica is in a range of 2/1 to 1/10.

4. The tire of claims 1 or 2 characterized in that the said tread cap also contains 10 to 50 phr of at least one additional diene based elastomer selected from trans 1,4-polybutadiene elastomer and isoprene/butadiene copolymer elastomer.

5. The tire of claims 1 or 2 characterized in that, for said tread cap, the said coupler is composed of bis-3-(triethoxysilylpropyl) tetrasulfide.

6. The tire of claims 1 or 2 characterized in that the said coupler is a bis-3-(trialkoxysilylalkyl) polysulfide having a polysulfide bridge containing from 2 to 8 connecting sulfur atoms.

## Patentansprüche

1. Luftreifen, dadurch gekennzeichnet, daß dieser eine gemäß der TRA zulässige maximale Belastungsgrenze von mindestens 1220 kg bei einem Fülldruck in einem Bereich von 723 kpa bis 792 kpa und einen Wulstdurchmesser von mindestens 48 cm aufweist, wobei der Reifen eine Kautschuklauffläche mit einer Oberteil/Unterteil-Konstruktion aufweist, wobei
(A) das Laufflächenunterteil aus 100 Gewichtsteilen cis-1,4-Polyisoprennaturkautschuk besteht, der mit 20 bis 60 phr Verstärkungsfüllstoff verstärkt ist, der aus 70 bis 100 Gewichtsprozent Ruß und entsprechend zwischen null und 30 Gewichtsprozent gefällter Kieselsäure besteht, und wobei
(B) das Laufflächenoberteil auf der Grundlage von 100 Gewichtsteilen Kautschuk besteht aus (1) 20 bis 50 phr cis-1,4-Polyisoprennaturkautschuk, (2) 25 bis 80 phr Styrol/Butadien-Copolymer-elastomer, das ausgewählt ist aus mindestens einem von durch Emulsionspolymerisation hergestelltem Styrol/Butadien-Copolymer und durch Polymerisation in organischer Lösung hergestelltem Styrol/Butadien-Copolymer, (3) null bis 50 phr cis-1,4-Polybutadienelastomer; und das 40 bis 80 phr Verstärkungskieselsäure- und -rußfüllstoff enthält, der aus 5 bis 60 phr gefällter Kieselsäure und mindestens einem Kieselsäurekupplungsmittel besteht, das einen Silananteil aufweist, der mit der Oberfläche der Kieselsäure reagiert, und einen Anteil aufweist, der mit dem Elastomer wechselwirkt; wobei die Kieselsäure für das Laufflächenoberteil gekennzeichnet ist durch eine Kombination aus (i) einer BET-Oberfläche von 160 bis 200 m²/g, (ii) einem durchschnittlichen V(Hg)-Wert in einem Bereich von 1,7 bis 1,95, (iii) einem durchschnittlichen PSDmax in einem Bereich von 10 bis 45 und (iv) einem durchschnittlichen V2/Vl-Verhältnis in einem Bereich von 30 bis 65.

2. Luftreifen nach Anspruch 1, dadurch gekennzeichnet, daß er eine gemäß der TRA zulässige Belastungsgrenze von mindestens 2730 kg bei einem Fülldruck in einem Bereich von 723 bis 792 kpa und einen Wulstdurchmesser von mindestens 56 cm aufweist, wobei der Reifen eine Kautschuklauffläche mit einer integralen Oberteil/Unterteil-Konstruktion aufweist, wobei
(A) das Laufflächenunterteil aus 100 Gewichtsteilen cis-1,4-Polyisoprennaturkautschuk besteht, der mit 20 bis 60 phr Verstärkungsfüllstoff verstärkt ist, der aus 70 bis 100 Gewichtsprozent Ruß und entsprechend zwischen null und 30 Gewichtsprozent gefällter Kieselsäure besteht, und wobei
(B) das Laufflächenoberteil auf der Grundlage von 100 Gewichtsteilen Kautschuk besteht aus (1) 30 bis 50 phr cis-1,4-Polyisoprennaturkautschuk, (2) 30 bis 70 phr Styrol/Butadien-Copolymerelastomer, das ausgewählt ist aus mindestens einem von durch Emulsionspolymerisation hergestelltem Styrol/Butadien-Copolymer und durch Polymerisation in organischer Lösung hergestelltem Styrol/Butadien-Copolymer, (3) 10 bis 25 phr cis-1,4-Polybutadienelastomer; 40 bis 80 phr Ruß- und Kieselsäureverstärkungsfüllstoff, der aus 20 bis 60 phr der gefällten Kieselsäure und mindestens einem Kieselsäurekupplungsmittel besteht, das einen Silananteil aufweist, der mit der Oberfläche der Kieselsäure reagiert, und einen Anteil aufweist, der mit dem Elastomer wechselwirkt.

3. Reifen nach Anspruch 1 oder 2, dadurch gekennzeichnet, daß für das Laufflächenoberteil das Gewichtsverhältnis von Ruß zu Kieselsäure in einem Bereich von 2/1 bis 1/10 liegt.

4. Reifen nach Anspruch 1 oder 2, dadurch gekennzeichnet, daß das Laufflächenoberteil auch 10 bis 50 phr von mindestens einem zusätzlichen, auf Dien beruhendem Elastomer enthält, das aus trans-1,4-Polybutadienelastomer und Isopren / Butadien-Copolymerelastomer ausgewählt ist.

5. Reifen nach Anspruch 1 oder 2, dadurch gekennzeichnet, daß für das Laufflächenoberteil das Kupplungsmittel aus bis-3-(Triethoxysilylpropyl)tetrasulfid besteht.

6. Reifen nach Anspruch 1 oder 2, dadurch gekennzeichnet, daß das Kupplungsmittel ein bis-3-(Trialkoxysilylalkyl)polysulfid mit einer Polysulfidbrücke ist, die zwischen 2 und 8 Verbindungsschwefelatome enthält.

## Revendications

1. Bandage pneumatique caractérisé par le fait qu'il possède une limite de charge maximale nominale TRA d'au moins 1220 kg sous une pression de gonflage dans le domaine de 723 kPa à 792 kPa et un diamètre de talon d'au moins 48 cm, le pneumatique possédant une bande de roulement en caoutchouc possédant une structure du type à sommet/base dans laquelle
(A) la base de la bande de roulement comprend 100 parties en poids de caoutchouc naturel de cis-1,4-polyisoprène renforcé avec de 20 à 60 phr d'une matière de renforcement comprenant du noir de carbone à concurrence de 70 à 100% en poids et, de manière correspondante, de la silice précipitée à concurrence de 0 à 30% en poids, et dans laquelle
(B) le sommet de la bande de roulement comprend, basées sur 100 parties en poids de caoutchouc, (1) de 20 à 50 phr de caoutchouc naturel de cis-1,4-polyisoprène, (2) de 25 à 80 phr d'un élastomère de copolymère de styrène/butadiène choisi parmi au moins un copolymère comprenant un copolymère de styrène-butadiène préparé par polymérisation en émulsion et un copolymère de styrène-butadiène préparé par polymérisation en solution dans un solvant organique, (3) de 0 à 50 phr d'un élastomère de cis-1,4-polybutadiène; et qui contient de 40 à 80 phr d'une matière de charge de renforcement à base de silice de renforcement et de noir de carbone comprenant de 5 à 60 phr de silice précipitée et au moins un coupleur pour la silice possédant une fraction de silane apte à réagir avec la surface de la silice et une fraction agissant de manière réciproque avec ledit élastomère; dans lequel ladite silice pour ledit sommet de la bande de roulement est identifiée par une combinaison de (i) une aire de surface BET de 160 à 200 m²/g, (ii) une valeur V(Hg) moyenne dans le domaine de 1,7 à 1,95, (iii) une valeur maximale moyenne PSD dans le domaine de 10 à 45, et (iv) un rapport V2/V1 moyen dans le domaine de 30 à 65.

2. Bandage pneumatique selon la revendication 1, caractérisé par le fait qu'il possède une limite de charge nominale TRA d'au moins 2730 kg sous une pression de gonflage dans le domaine de 723 kPa à 792 kPa et un diamètre de talon d'au moins 56 cm, le pneumatique comportant une bande de roulement en caoutchouc possédant une structure solidaire du type à sommet/base dans laquelle
(A) la base de la bande de roulement comprend 100 parties en poids de caoutchouc naturel de cis-1,4-polyisoprène renforcé avec de 20 à 60 phr d'une matière de charge de renforcement comprenant du noir de carbone à concurrence de 70 à 100% en poids et, de manière correspondante, de la silice précipitée à concurrence de 0 à 30% en poids, et dans laquelle
(B) le sommet de la bande de roulement comprend, basées sur 100 parties en poids de caoutchouc, (1) de 30 à 50 phr de caoutchouc naturel de cis-1,4-polyisoprène, (2) de 30 à 70 phr d'un élastomère de copolymère de styrène/butadiène choisi parmi au moins un copolymère comprenant un copolymère de styrène-butadiène préparé par polymérisation en émulsion et un copolymère de styrène-butadiène préparé par polymérisation en solution dans un solvant organique, (3) de 10 à 25 phr d'un élastomère de cis-1,4-polybutadiène; et qui contient de 40 à 80 phr d'une matière de charge de renforcement à base de noir de carbone et de silice comprenant de 20 à 60 phr de ladite silice précipitée et au moins un coupleur pour la silice possédant une fraction de silane apte à réagir avec la surface de la silice et une fraction agissant de manière réciproque avec ledit élastomère.

3. Pneumatique selon la revendication 1 ou 2, caractérisé en ce que, pour ledit sommet de la bande de roulement, le rapport pondéral du noir de carbone à la silice se situe dans le domaine de 2/1 à 1/10.

4. Pneumatique selon la revendication 1 ou 2, caractérisé en ce que ledit sommet de la bande de roulement contient également de 10 à 50 phr d'au moins un élastomère supplémentaire à base diénique choisi parmi un élastomère de trans-1,4-polybutadiène et un élastomère de copolymère d'isoprène/butadiène.

5. Pneumatique selon la revendication 1 ou 2, caractérisé en ce que, pour ledit sommet de la bande de roulement, ledit coupleur est composé du bis-3-(triéthoxysilylpropyl)tétrasulfure.

6. Pneumatique selon la revendication 1 ou 2, caractérisé en ce que ledit coupleur est un bis-3-(trialcoxysilylalkyl)polysulfure possédant un pont polysulfure contenant de 2 à 8 atomes de soufre de liaison.
